(19) Europäisches Patentamt
European Patent Office
Office européen des brevets

(11) **EP 2 482 714 B1**

(12) **EUROPEAN PATENT SPECIFICATION**

(45) Date of publication and mention
of the grant of the patent:
**15.02.2023  Bulletin 2023/07**

(21) Application number: **10819107.3**

(22) Date of filing: **28.09.2010**

(51) International Patent Classification (IPC):
**A61B 5/00** (1968.09)          **G01G 19/414** (1990.01)
**G01G 23/37** (1968.09)

(52) Cooperative Patent Classification (CPC):
**G01G 23/3742; G01G 19/414; G01G 23/3735**

(86) International application number:
**PCT/SE2010/000233**

(87) International publication number:
**WO 2011/037513 (31.03.2011 Gazette 2011/13)**

(54) **METHOD AND APPARATUS FOR MEASURING AND PRESENTING EATING RATE**

VERFAHREN UND VORRICHTUNG ZUR MESSUNG UND DARSTELLUNG EINER
ESSGESCHWINDIGKEIT

PROCÉDÉ ET APPAREIL DE MESURE ET DE PRÉSENTATION D'UNE VITESSE D'ALIMENTATION

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority:  **28.09.2009  SE 0901245**

(43) Date of publication of application:
**08.08.2012  Bulletin 2012/32**

(73) Proprietor: **Mandometer AB**
**141 04 Huddinge (SE)**

(72) Inventors:
• **ZANDIAN, Motjaba**
  **120 68 Stockholm (SE)**
• **BERGH, Cecilia**
  **118 20 Stockholm (SE)**
• **SÖDERSTEN, Per**
  **118 20 Stockholm (SE)**

(74) Representative: **Bjerkén Hynell KB**
**Tulegatan 53**
**113 53 Stockholm (SE)**

(56) References cited:
WO-A1-96/02183          WO-A2-02/25228
US-A- 5 233 520          US-A- 5 817 006
US-A1- 2002 099 274      US-A1- 2002 124 017
US-B1- 6 790 178

• **ZANDIAN M ET AL: "Decelerated and linear eaters: Effect of eating rate on food intake and satiety", PHYSIOLOGY AND BEHAVIOR, ELSEVIER SCIENCE LTD., OXFORD, GB, vol. 96, no. 2, 16 February 2009 (2009-02-16), pages 270-275, XP025872946, ISSN: 0031-9384, DOI: 10.1016/J.PHYSBEH.2008.10.011 [retrieved on 2008-10-18]**
• **IOAKIMIDIS I. ET AL: 'A method for the control of eating rate: a potential intervention in eating disorders' BEHAVIOR RESEARCH METHODS vol. 41, no. 3, August 2009, pages 755 - 760, XP003028203**
• **MODJTABA ZANDIAN ET AL.: 'Linear eaters turned decelerated: reduction of a risk for disordered eating?' PHYSIOLOGY AND BEHAVIOR vol. 96, no. 4-5, 23 March 2009, pages 518 - 521, XP025952277**
• **GUSS J.L. ET AL: 'Microstructural analyses of human ingestive patterns: From description to mechanistic hypotheses' NEUROSCIENCE AND BIOBEHAVIORAL REVIEWS vol. 24, no. 2, March 2000, pages 261 - 268, XP003028204**
• **MODJTABA ZANDIAN ET AL.: 'Decelerated and linear eaters: effect of eating rate on food intake and satiety' PHYSIOLOGY AND BEHAVIOR vol. 96, no. 2, 16 February 2009, pages 270 - 275, XP025872946**

- **WESTERTERP-PLATENGA M.S. ET AL: 'The shape of the cumulative food intake curve in humans, during basic and manipulated meals' PHYSIOLOGY AND BEHAVIOR vol. 47, no. 3, 1990, US, pages 569 - 576, XP024317840**
- **LINDGREN A.C. ET AL: 'Eating behavior in Prader-Willi syndrome, normal weight, and obese control groups' JOURNAL OF PEDIATRICS vol. 137, no. 1, 2000, pages 50 - 55, XP003025670**

**Description**

**Technical field**

The present invention pertains to a medical apparatus made up of at least two devices adapted to measure eating rate utilized to teach persons to eat according to a predetermined graphic eating curve displayed on a screen, and a method therefore.

**Background art**

An apparatus named "Mandometer®" has been developed at the Section of Applied Neuroendocrinology and Mandometer® Clinic, Karolinska Institutet, Stockholm, Sweden, It consists of a scale that is connected to a computer. A plate is placed on the scale, the patient puts a measured portion of food determined by a therapist on the plate and the computer records and stores the weight loss from the plate while the patient eats.

This yields a curve of eating rate which is visible to the patient on the computer screen during a meal and can be compared to a pre-set eating curve on screen. At regular intervals, a rating scale appears on the monitor of the computer and the patient rates her/his level of fullness/satiety. The scale has numerical values from 0 (no satiety) to 100 (maximum satiety). As the patients rate their satiety a dot appears on the screen and yields a curve of the development of satiety (fullness). The patients can thus compare their development of fullness to a "normal" fullness curve again pre-set on screen. During "Mandometer®-training" the patient gradually adopts a more normal pattern of eating and satiety by following the training curves, which are displayed on the monitor during the meal. These methods were originally developed for treating eating disorders such as anorexia and bulimia nervosa: they have been evaluated in a randomized controlled trial with an estimated rate of remission of 75%. It was suggested many years ago that most obese people eat at a high constant rate, and in a pilot study on obese adolescents using Mandometer® this observation was confirmed.

The apparatus Mandometer® is patented in several countries for instance in the U.S. under the Patent No. US5817006 to Bergh et al.
Further prior art referring to this technical field can be found in document WO 02/25228 A2, disclosing a portable computing/ communication device, and more particularly a device that has the ability to accept plug-in modules/accessories, with the ability to assist in the monitoring of nutritional intake and adherence to a diet plan.
Further prior art referring to this technical field can be found in document Zandian M. et al., "Decelerated and linear eaters: Effect of eating rate on food intake and satiety", in Physiology and behavior, Elsevier Science Ltd., Oxford, GB, vol. 96, no. 2, 16 February 2009, pages 270-275, XP025872946, ISSN: 0031-9384, in which a study is disclosed that compares the eating behavior of women with respect to linear and non-linear eating curves.

**Summary of the Invention**

The present invention has as one aim to provide a medical apparatus measuring eating rate utilized to teach persons to eat in a normal eating rate in order to aid them to feel full after an intake of a meal, and still gaining or losing weight in a controlled scientific environment. Resent scientific studies have shown that a descending rate of eating prevent persons to overeat by eating in a correct manor which has clinical implication for obese to lose weight.

As such the present invention sets forth a medical apparatus made up of at least two devices adapted to measure eating rate utilized to teach persons to eat according to a predetermined graphic eating curve displayed on a screen. Hereby, the invention comprises:

a device with a screen storing the predetermined graphic eating curve in a memory, the first device having at least one of remote near field radiation and wire capabilities for communication with a related second device;
the related second device scale is adapted to communicate with the first device, having at least one of remote near field radiation and wire communication capabilities adapted to the first device;
weighing food on the scale in a measurement session of a length of time, and transmitting the food weight to the first device through the communication capabilities when food is removed from the scale by a person eating the food, and through means of software residing in the first device storing the amount of food removed during a session in the memory, displaying the weight of food removed as a measurement point on the screen when it is removed from the scale to make up a real time graphic eating curve to be compared with the predetermined eating curve; and further comprising:
means in the memory automatically calculating equations for predetermined eating curves based on data obtained from a cumulative food intake in a control meal through an introductory curve followed by training curves, whereby the cumulative food intake is fitted to a quadratic equation $y=ax^2+bx+c$, where the parameter y represents food intake, a represents a change in the slope of the curve over time, b represents a constant slope of the curve over time, the initial rate of eating, and c represents food intake at the start of a meal, whereby the introductory curve has the same properties as the cumulative food intake obtained in a control meal.

In one preferred embodiment of the present invention, the equation for each training curve is based on a decelerated eating style characterized by a being < -1, or a linear type of the equation characterized by a in the equation being between 0 a a > -1, whereby a normal initial eating rate constitutes 48 gram/ minutes, and a normal food intake is 320 - 360 grams and a normal meal duration is 12-15 minutes, thus a pseudo code for the rate of eating is comprised by:

$$y = ax^2 + bx + c$$

$$\text{Food intake} = \text{If } y > 720 \text{ Then } 600 \text{ Else } y - 70$$

$$\text{Initial eating rate} = b - (\tfrac{1}{4}(b - 48))$$

$$\text{Deceleration or linear rate} = \frac{y - bx}{x^2}$$

Another embodiment comprises that the scale and the first device is integrated into a single device.

A further embodiment comprises that the scale has its scale measuring surface formed as a bowl or plate to be served food on.

A still further embodiment provides that the scale is pocket portable.

Yet one embodiment provides that the predetermined graphic curve describes a non linear eating behaviour, which is found through science studies to mimic an eating behaviour that is favourable to human beings.

Yet another embodiment comprises that the predetermined graphic curve describes a linear rate of eating behaviour.

Yet a still further embodiment provides that a predetermined graphic curve of satiety is displayed on the screen, to be compared with satiety ratings made during pre-set time intervals on the screen by a person utilizing the device.

Furthermore, the present invention sets forth a method adapted to a medical apparatus made up of at least two devices adapted to measure eating rate utilized to teach persons to eat according to a predetermined graphic eating curve displayed on a screen. The invention method thus comprises:

storing the predetermined graphic eating curve in a memory of a device with a screen, the first device having at least one of remote near field radiation and wire capabilities for communication with a related second device;

adapting a scale to communicate with the first device through the related second device, having at least one of remote near field radiation and wire communication capabilities adapted to the first device;

weighing food on the scale in a measurement session of a length of time, and transmitting the food weight to the first device through the communication capabilities when food is removed from the scale by a person eating the food, and through means of software residing in the first device storing the amount of food removed during a session in the memory, displaying the weight of food removed as a measurement point on the screen when it is removed from the scale to make up a real time graphic eating curve to be compared with the predetermined eating curve;

and further comprising:

automatically calculating equations through means in the memory for predetermined eating curves based on data obtained from a cumulative food intake in a control meal through an introductory curve followed by training curves, whereby the cumulative food intake is fitted to a quadratic equation $y=ax^2+bx+c$, where the parameter y represents food intake, a represents a change in the slope of the curve over time, b represents a constant slope of the curve over time, the initial rate of eating, and c represents food intake at the start of a meal, whereby the introductory curve has the same properties as the cumulative food intake obtained in control a meal.

The present invention method also adheres to the attached dependent claims of the above mentioned apparatus.

**Brief description of the drawings**

Henceforth reference is had to the attached figures in the accompanying text of the description for a better understanding of the present invention with its embodiments and given examples, wherein:

> **Fig. 1** is illustrating graphics for a linear eating behaviour;
> **Fig. 2** is illustrating graphics for a descending eating behaviour; and
> **Fig. 3** is schematically illustrating an embodiment of an apparatus with cellular radio capabilities in contact with a scale through near field radiation communication in accordance with the present invention.

## Detailed description of preferred embodiments

The present invention is related to a medical measuring apparatus consisting of a first device such as cellular phones, PDA's, computers, PC, Laptop, Iphone ®, androids, and like devices. A second device is in the form of a scale for measuring every portion of food eaten by a person from a plate or bowl or the like placed on the scale during a meal. This apparatus is utilized in teaching persons suffering from anorexia nervosa, bulimia nervosa, obesity, other gastrointestinal problems and persons that would like to have control of their intake of food to keep them fit.

A study regarding obesity among children and youth was conducted at Bristol Royal Hospital for Children in England utilizing the "Mandometer®" (prior art), which was developed at the Section of Applied Neuroendocrinology and Mandometer® Clinic, Karolinska Institute!, Stockholm, Sweden. It consists of a scale that is connected to a computer. A plate is placed on the scale; the patient puts a measured portion of food determined by a therapist on the plate and the computer records and stores the weight loss from the plate while the patient eats.

This yields a curve of eating rate which is visible to the patient on the computer screen during their meal and can be compared to a pre-set eating curve on screen. At regular intervals, a rating scale appears on the monitor of the computer and the patient rates her/his level of fullness. The scale has for instance numerical values from 0 (no satiety) to 100 (maximum satiety). As patients rate their satiety a dot appears on the screen and yields a curve of the development of satiety (fullness). The patient can thus compare their development of fullness to a "normal" fullness curve again pre-set on screen. During "Mandometer®-training" the patient gradually adopts a more normal pattern of eating and satiety by following the training curves, which are displayed on the monitor during the meal. These methods were originally developed for treating eating disorders such as anorexia and bulimia nervosa.

This study came to a further improved possible outcome, namely that Mandometer® curves for practicing eating can have a decelerated shape, as this pattern may protect individuals for overeating. Analysis of the average speed of eating, as used here, neglects minute-to-minute changes during the meal, which may explain the absence of a statistically significant effect on this simplified measure of speed of eating.

The findings of decelerated eating have been undergoing further scientific tests and analysis emanating in the following scientific papers "Decelerated and linear eaters: Effect of eating rate on food intake and satiety Modjtaba Zandian a, toannis toakimidis a, Cecilia Bergh a, Ulf Brodin a,b, Per Södersten a, published by Elsevier, Physiology & Behavior, received March 18, 2008, received in revised form 2 October 2, 2008, and accepted October 9, 2008:

> a) Karolinska Institutet, Section of Applied Neuroendocrinology, NVS, and Mandometer and Mandolean Clinics, AB Mando, Novum, S-141 57 Huddinge, Sweden
> b) Karolinska Institutet, LIME, Section of Medical Statistics, S-171 77 Stockholm, Sweden.

Another published paper is "Linear eaters turned decelerated: Reduction of a risk for disordered eating?" to Modjtaba Zandian, Ioannis Ioakimidis, Cecilia Bergh, Per Södersten, published by Elsevier, Physiology & Behavior, received July 4, 2008, revised November 14, 2008, and accepted November 25, 2008.

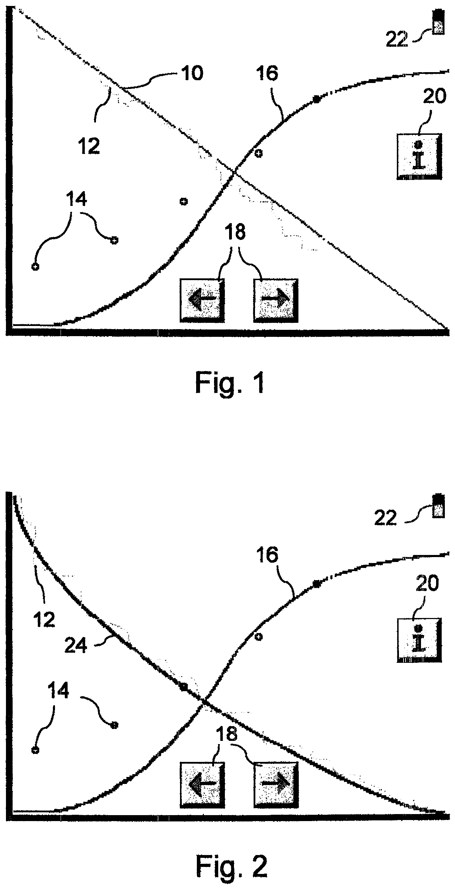

Henceforth, an embodiment of an apparatus utilized for the descended eating rate scientific findings is described as an example out of many possible apparatus. It is appreciated that the equation utilized in this invention also can be fitted to non decelerating linear eating! linear eating behaviors such as described through Fig. 1.

in Fig. 1 graphics are illustrated for linear eating, which was the prior standard for measuring eating rate and satiety utilizing the Mandometer® measuring device or the apparatus of the present invention. Hereby, a predetermined linear eating rate curve 10 is depicted together with an actual real time eating curve 12 recorded from a person utilizing the Mandometer® measuring device. The curve 12 should as much as possible match the linear curve 10 to achieve an acceptable normal eating rate, which can aid the person eating to gain or lose weight depending on the persons physical condition.

The dots 14 show how the person eating has rated the satiety during predetermined time periods/intervals, which if connected with a line make up a curve itself illustrating the satiety/fullness of the person eating. Moreover, the Fig. 1 depicts a predetermined sigmoid curve 16 mimicking a normal satiety rating to be compared with the satiety ratings 14 made by the person eating. Buttons 18 are touch buttons utilized to browse between different stored meals in the device with cellular capabilities in accordance with an embodiment of the present invention. Also shown in Fig. 1 is an information button 20, which if pushed for instance shows the amount of food eaten during a session and the duration of the session. Also shown is an icon for the battery charge 22 of the cellular device.

Fig. 2 illustrates similar curves and functions as in Fig. 1, but with the difference that a curve 24 shows a descended eating rate according to recent scientific research results, which better mimics an average persons eating rate.

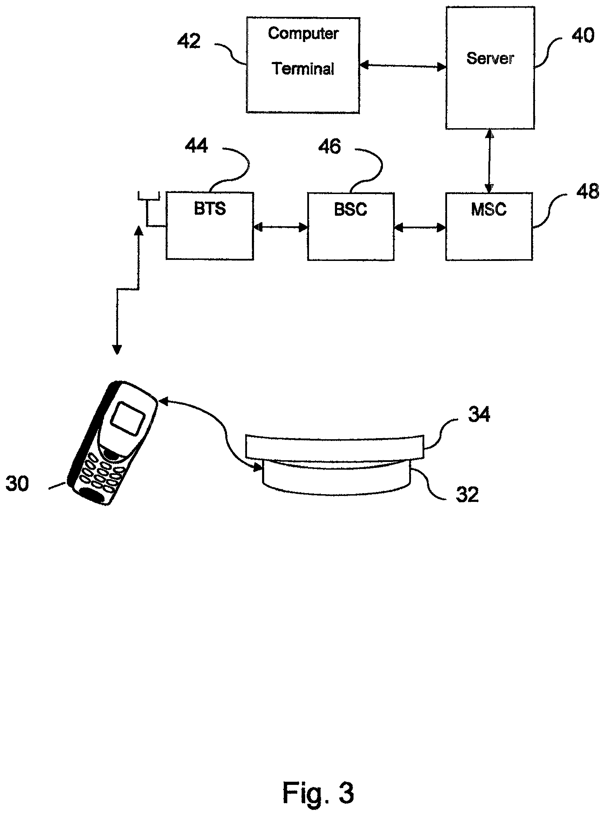

Fig. 3 schematically depicts an embodiment out of many possible of the apparatus according to the present invention by comprising a cellular phone 30 with a display screen of any known constitution such as having a conventional keypad or a touch screen. Moreover the apparatus comprises a scale 32 of preferably a small pocket size. It also shows a plate or bowl 34 utilized to put food on when a person is eating. The cellular device 30 and scale 32 communicate with each other through near field radiation such as for instance Bluetooth or Infrared (IR) or the like, schematically depicted through the double arrow.

A communication between the scale and the cellular device 30 transmits data of how much food the person eating removes from the plate 34 in eating intervals, and the eating rate. The person also rates the satiety 14 in predetermined time intervals on the cellular device screen. Hence, the curves for eating rate 12 and satiety 14 according to Fig. 1 and Fig. 2 are displayed so that a person eating from the plate 34 can adapt its eating rate to the curves 10, 24 for a predetermined eating rate and/or compare its satiety to the curves 16 showing satiety.

Moreover, a software means is utilized to transmit the stored session through the first device 30 cellular phone capabilities to a remote server 40 connected with a computer terminal 42 for registration of curves for eating rate 12. A means in the server 40 is able to send adapting instructions to the first device 30 regarding what predetermined graphic eating curve 10, 24 to be utilized from arbitrary geographical places due to previous registrations of real time graphic eating curves in order to adapt the registered eating behaviour of a person utilizing the system apparatus of the present invention.

The cellular phone 30 and server 40 with terminal 32 communicate through known techniques by for instance a base station transceiver (BST) 44 via a base station controller (BSC) 46 and a mobile services switch 48. The communication between devices 40, 42, 44, 46, 48 and cellular phone 30 with scale 32 is depicted through double pointed arrows in Fig. 3.

Persons utilizing the present invention apparatus could in a worst case scenario be in immediate need of medical care, thus it is provided in one embodiment that the location of a person utilizing the apparatus can be tracked through for instance a global positioning system (GPS) residing in the cellular phone 30. Another possibility of tracking the person could be achieved by utilizing the signalling system of the phone 30, which includes wireless mobile location data in the call signal. Wireless mobile location data pin points the real time geographical location of the phone 30, and in most cases also where the user of the phone 30 is located.

Hence, Fig. 3 presents a possible embodiment of the present invention medical apparatus 30, 32 made up of at least two devices adapted to measure eating rate 12 utilized to teach persons to eat according to a predetermined graphic eating curve 10, 24 displayed on a screen. Hereby it comprises a device 30 with a screen storing the predetermined graphic eating curve 10, 24 in a memory. The first device 30 has at least one of remote near field radiation and wire capabilities for communication with a related second device 32. A wire connection for instance an USB, VGA or other known connection can be utilized when the first device for instance is a Laptop or other known computer.

The related second device 32 scale is adapted to communicate with the first device 30, and has at least one of remote near field radiation and wire communication capabilities adapted to the first device 30. A weighing of food on the scale 32 in a measurement session of a length of time is conducted, and the food weight is transmitted to the first device 30 through the communication capabilities when food is removed from the scale by a person eating the food. This is accomplished through means of software residing in the first device 30 storing the amount of food removed during a session in the memory, and which displays the weight of food removed as a measurement point on the screen when it is removed from the scale to make up a real time graphic eating curve 12 to be compared with the predetermined eating curve 10, 24.

Moreover, the present invention comprises means, for instance software means, in the memory automatically calculating equations for predetermined eating curves 10, 24 based on data obtained from a cumulative food intake in a control meal through an introductory curve followed by training curves. The cumulative food intake is fitted to a quadratic equation $y=ax^2+bx+c$, where the parameter y represents food intake, and represents a change in the slope of the curve over time represented by the parameter x, b represents a constant slope of the curve over time, the initial rate of eating, and c represents food intake at the start of a meal, whereby the introductory curve has the same properties as the cumulative food intake obtained in control a meal.

In one preferred embodiment of the present invention, the equation for each training curve is based on a decelerated eating style characterized by a being < -1, or a linear type of the equation characterized by a in the equation being between $0 \geq a > -1$, whereby a normal initial eating rate constitutes 48 gram/ minutes, and a normal food intake is 320 - 360 grams and a normal meal duration is 12-15 minutes, thus a pseudo code for the rate of eating is comprised by:

$$y = ax^2 + bx + c$$

EP 2 482 714 B1

$$\text{Food intake} = \text{If } y > 720 \text{ Then } 600 \text{ Else } y - 70$$

$$\text{Initial eating rate} = b - (\tfrac{1}{4}(b - 48))$$

$$\text{Deceleration or linear rate} = \frac{y - bx}{x^2}$$
depending on the rate of a

depending on the rate of a

Another embodiment comprises that the scale and the first device are integrated into a single device. A further embodiment comprises that the scale has its scale measuring surface formed as a bowl or plate to be served food on.

A still further embodiment provides that the scale is pocket portable. One embodiment provides that the predetermined graphic curve describes a non linear eating behaviour, which is found through science studies to mimic an eating behaviour that is favourable to human beings.

Another embodiment comprises that the predetermined graphic curve describes a linear rate of eating behaviour. Yet a still further embodiment provides that a predetermined graphic curve of satiety is displayed on the screen, to be compared with satiety ratings made during pre-set time intervals on the screen by a person utilizing the device.

Furthermore, the present invention includes a method adapted to a medical apparatus made up of at least two devices adapted to measure eating rate utilized to teach persons to eat according to a predetermined graphic eating curve displayed on a screen. The invention method thus comprises storing the predetermined graphic eating curve in a memory of a device with a screen. The first device has at least one of remote near field radiation and wire capabilities for communication with a related second device. A scale is adapted to communicate with the first device through the related second device, which has at least one of remote near field radiation and wire communication capabilities adapted to the first device. Food is weighed on the scale in a measurement session of a length of time, and the food weight is transmitted to the first device through the communication capabilities, when food is removed from the scale by a person eating the food. This is accomplished through means of software residing in the first device storing the amount of food removed during a session in the memory, and displaying the weight of food removed as a measurement point on the screen when it is removed from the scale to make up a real time graphic eating curve to be compared with the predetermined eating curve.

Moreover, the present method comprises an automatic calculation of equations through means in the memory for predetermined eating curves based on data obtained from a cumulative food intake in a control meal through an introductory curve followed by training curves. The cumulative food intake is fitted to a quadratic equation $y=ax^2+bx+c$, where the parameter y represents food intake, a represents a change in the slope of the curve over time x, b represents a constant slope of the curve over time, the initial rate of eating, and c represents food intake at the start of a meal, whereby the introductory curve has the same properties as the cumulative food intake obtained in control a meal.

**Claims**

1. A medical apparatus (30, 32) made up of at least two devices adapted to measure eating rate (12) utilized to teach persons to eat according to a predetermined graphic eating curve (10, 24) displayed on a screen, comprising:

   a device (30) with a screen storing said predetermined graphic eating curve (10, 24) in a memory, said first device (30) having at least one of remote near field radiation and wire capabilities for communication with a related second device (32);
   said related second device (32) scale adapted to communicate with said first device (30), having at least one of remote near field radiation and wire communication capabilities adapted to said first device (30);
   said scale being adapted to receive food to be weighed for a predetermined length of time, the system further comprising means adapted to transmit the food weight to said first device (30) through said communication capabilities when food is removed from said scale by a person eating the food, and through means of software residing in said first device (30) storing the amount of food removed during a session in said memory, displaying the weight of food removed as a measurement point on said screen when it is removed from said scale to make up a real time graphic eating curve (12) to be compared with said predetermined eating curve (10, 24);
   **characterised in that** the medical apparatus is further comprising:
   means in said memory automatically calculating equations for predetermined eating curves (10, 24) based on data obtained from a cumulative food intake in a control meal through an introductory curve followed by training curves, whereby the cumulative food intake is fitted to a quadratic equation $y=ax^2+bx+c$, where the parameter y represents food intake, a represents a change in the slope of the curve over time x, b represents a constant slope of the curve over time, the initial rate of eating, and c represents food intake at the start of a meal, whereby the introductory curve has the same properties as the cumulative food intake obtained in control a meal.

2. An apparatus according to claim 1, wherein the equation for each training curve is based on a decelerated eating style **characterized by** a being < -1 g/min$^2$, or a linear type of the equation **characterized by** a in the equation being between $0 >= a > -1$ g/min$^2$, whereby a normal initial eating rate constitutes 48 g/ min, and a normal food intake is 320 - 360 g and a normal meal duration is 12-15 min, thus a pseudo code for the rate of eating is comprised by: $y = ax^2 + bx + c$

$$\text{Food intake} = \text{If } y > 720 \text{ g Then } 600 \text{ Else } y - 70 \text{ g}$$

$$\text{Initial eating rate} = b - ([1/4] (b - 48 \text{ g/min}))$$

$$\text{Deceleration or linear rate} = (y-bx) / x^2$$

3. An apparatus according to claim 1, wherein said scale (32) has its scale measuring surface formed as a bowl or plate to be served food on.

4. An apparatus according to claim 1, wherein said scale (32) is of a small pocket size.

5. An apparatus according to claim 1, wherein said predetermined graphic curve (24) describes a non linear eating behaviour, which is adapted to mimic an eating behaviour that is favourable to human beings.

6. An apparatus according to claim 1, wherein said predetermined graphic curve (10) describes a linear rate of eating behaviour.

7. An apparatus according to claim 1 , wherein a predetermined graphic curve of satiety (16) is displayed on said screen, to be compared with satiety ratings (14) made during pre-set time intervals on said screen by a person utilizing said device (30, 32).

8. A method adapted to a medical apparatus (30, 32) made up of at least two devices adapted to measure eating rate (12) utilized to teach persons to eat according to a predetermined graphic eating curve (10, 24) displayed on a screen, comprising:

storing said predetermined graphic eating curve (10, 24) in a memory of a device (30) with a screen, said first device (30) having at least one of remote near field radiation and wire capabilities for communication with a related second device (32);
adapting a scale to communicate with said first device (30) through said related second device (32), having at least one of remote near field radiation and wire communication capabilities adapted to said first device (30);
weighing food on said scale (32) in a measurement session of a length of time, and transmitting the food weight to said first device (30) through said communication capabilities when food is removed from said scale by a person eating the food, and through means of software residing in said first device (30) storing the amount of food removed during a session in said memory, displaying the weight of food removed as a measurement point on said screen when it is removed from said scale to make up a real time graphic eating curve (12) to be compared with said predetermined eating curve (10, 24);
**characterised in that** the method is further comprising:
automatically calculating equations through means in said memory for predetermined eating curves (10, 24) based on data obtained from a cumulative food intake in a control meal through an introductory curve followed by training curves, whereby the cumulative food intake is fitted to a quadratic equation $y=ax^2+bx+c$, where the parameter y represents food intake, a represents a change in the slope of the curve over time, b represents a constant slope of the curve over time x, the initial rate of eating, and c represents food intake at the start of a meal, whereby the introductory curve has the same properties as the cumulative food intake obtained in control a meal.

9. A method according to claim 8, wherein the equation for each training curve is based on a decelerated eating style **characterized by** a being < -1 g/min$^2$, or a linear type of the equation **characterized by** a in the equation being between 0>= a > -1 g/min$^2$, whereby a normal initial eating rate constitutes 48 g/ min, and a normal food intake is 320 - 360 g and a normal meal duration is 12-15 min, thus a pseudo code for the rate of eating is comprised by: y = ax$^2$+ bx + c

$$\text{Food intake} = \text{If } y > 720 \text{ g Then 600 Else } y - 70 \text{ g}$$

$$\text{Initial eating rate} = b - ([1/4] (b - 48 \text{ g/min}))$$

$$\text{Deceleration or linear rate} = (y-bx) / x^2$$

10. A method according to claim 8, wherein said scale (32) has its scale measuring surface formed as a bowl or plate to be served food on, and preferably wherein said scale (32) is of a small pocket size.

11. A method according to claim 8, wherein said predetermined graphic curve (24) describes a non linear eating behaviour, which is adapted to mimic an eating behaviour that is favourable to human beings.

12. A method according to claim 8, wherein said predetermined graphic curve (10) describes a linear rate of eating behaviour.

13. A method according to claim 8, wherein a predetermined graphic curve of satiety (16) is displayed on said screen, to be compared with satiety ratings (14) made during pre-set time intervals on said screen by a person utilizing said apparatus (30, 32).

**Patentansprüche**

1. Medizinische Einrichtung (30, 32), zusammengesetzt aus mindestens zwei Vorrichtungen, die dazu eingerichtet ist, eine Essgeschwindigkeit (12) zu messen, die verwendet wird, um Personen beizubringen, gemäß einer vorbestimmten grafischen Esskurve (10, 24), die auf einem Bildschirm angezeigt wird, zu essen, umfassend:

eine Vorrichtung (30) mit einem Bildschirm, die die vorbestimmte grafische Esskurve (10, 24) in einem Speicher speichert, wobei die erste Vorrichtung (30) mindestens eines von entfernten Nahfeldstrahlungs- und drahtgebundenen Fähigkeiten für Kommunikation mit einer zugehörigen zweiten Vorrichtung (32) aufweist;
wobei die zugehörige zweite Vorrichtung (32) eine Waage umfasst, die dazu eingerichtet ist, mit der ersten Vorrichtung (30) zu kommunizieren und mindestens eine von entfernten Nahfeldstrahlungs- und drahtgebundenen Kommunikationsfähigkeiten aufweist, die an die erste Vorrichtung (30) angepasst sind;
wobei die Waage dazu eingerichtet ist, Lebensmittel aufzunehmen, die während einer vorbestimmten Zeitdauer gewogen werden sollen, wobei das System weiter Mittel umfasst, die dazu eingerichtet sind, über die Kommunikationsfähigkeiten das Lebensmittelgewicht an die erste Vorrichtung (30) zu übertragen wenn Lebensmittel von einer Person, die die Lebensmittel isst, von der Waage entnommen werden, und über Softwaremittel, die in der ersten Vorrichtung (30) untergebracht sind, die die Menge von während einer Sitzung entnommenen Lebensmittel in dem Speicher speichern und das Gewicht der entnommenen Lebensmittel als Messpunkt auf dem Bildschirm anzeigen, wenn sie aus der Waage entnommen werden, um in Echtzeit eine grafische Esskurve (12) zu erstellen, die mit der vorbestimmten Esskurve (10, 24) verglichen werden soll;
**dadurch gekennzeichnet, dass** die medizinische Einrichtung weiter Folgendes umfasst:
Mittel in dem Speicher, die automatisch Gleichungen für vorbestimmte Esskurven (10, 24) basierend auf Daten berechnen, die von einer kumulativen Lebensmitteleinnahme in einer Kontrollmahlzeit über eine Einführungskurve, gefolgt von Trainingskurven erhalten wurden, , wobei die kumulative Lebensmitteleinnahme an eine Gleichung zweiten Grades y=ax$^2$+bx+c angeglichen wird, in der der Parameter y Lebensmitteleinnahme darstellt, a eine Änderung in der Neigung der Kurve im Laufe der Zeit x darstellt, b eine konstante Neigung der Kurve im Laufe der Zeit, also die anfängliche Essgeschwindigkeit darstellt, und c die Lebensmitteleinnahme zu Beginn einer Mahlzeit darstellt, wobei die Einführungskurve die gleichen Eigenschaften aufweist wie die in einer Kontrollmahlzeit erhaltene kumulative Lebensmitteleinnahme.

2. Einrichtung nach Anspruch 1, wobei die Gleichung für jede Trainingskurve auf einem verlangsamten Essstil basiert, **dadurch gekennzeichnet, dass** a < -1 g/min$^2$ ist, oder einem linearen Gleichungstyp, **dadurch gekennzeichnet, dass** a in der Gleichung zwischen 0 >= a > -1 g/min$^2$ ist, wobei eine normale anfängliche Essgeschwindigkeit 48 g/min darstellt, und eine normale Lebensmitteleinnahme 320 - 360 g beträgt und eine normale Mahlzeitdauer 12 - 15 min beträgt, sodass ein Pseudocode für die Essgeschwindigkeit umfasst ist in: $y = ax^2 + bx + c$

$$\text{Lebensmitteleinnahme} = \text{wenn } y > 720 \text{ g, dann } 600, \text{ sonst } y - 70 \text{ g}$$

$$\text{Anfängliche Essgeschwindigkeit} = b - ([1/4] (b - 48 \text{ g/min}))$$

$$\text{Verlangsamung oder lineare Geschwindigkeit} = (y - bx) / x^2$$

3. Einrichtung nach Anspruch 1, wobei die Waagenmessoberfläche der Waage (32) als Schüssel oder Platte, auf der die Lebensmittel serviert werden sollen, ausgebildet ist.

4. Einrichtung nach Anspruch 1, wobei die Waage (32) in der Größe einer kleinen Tasche ist.

5. Einrichtung nach Anspruch 1, wobei die vorbestimmte grafische Kurve (24) ein nicht lineares Essverhalten beschreibt, das dazu eingerichtet ist, ein Essverhalten nachzuahmen, das für menschliche Wesen vorteilhaft ist.

6. Einrichtung nach Anspruch 1, wobei die vorbestimmte grafische Kurve (10) ein lineares Essgeschwindigkeitsverhalten beschreibt.

7. Einrichtung nach Anspruch 1, wobei eine vorbestimmte grafische Sättigungskurve (16) auf dem Bildschirm angezeigt wird, damit sie mit Sättigungswerten (14) verglichen wird, die während voreingestellten Zeitintervallen auf dem Bildschirm von einer Person, die die Vorrichtung (30, 32) verwendet, gemacht wurden.

8. Verfahren, das an eine medizinische Einrichtung (30, 32) angepasst ist, die aus mindestens zwei Vorrichtungen zusammengesetzt ist, dazu eingerichtet, die Essgeschwindigkeit (12) zu messen, die verwendet wird, um Personen beizubringen, gemäß einer vorbestimmten grafischen Esskurve (10, 24), die auf einem Bildschirm angezeigt wird, zu essen, umfassend:

Speichern der vorbestimmten grafischen Esskurve (10, 24) in einem Speicher einer Vorrichtung (30) mit einem Bildschirm, wobei die erste Vorrichtung (30) mindestens eines von entfernten Nahfeldstrahlungs- und drahtgebundenen Fähigkeiten für Kommunikation mit einer zugehörigen zweiten Vorrichtung (32) aufweist;
Einrichten einer Waage, um über die zugehörige zweite Vorrichtung (32), die mindestens eine von entfernten Nahfeldstrahlungs- und drahtgebundenen Kommunikationsfähigkeiten aufweist, die an die erste Vorrichtung (30) angepasst sind, mit der ersten Vorrichtung (30) zu kommunizieren;
Wiegen von Lebensmitteln auf der Waage (32) in einer Messsitzung von einer Zeitdauer, und Übertragen des Lebensmittelgewichts an die erste Vorrichtung (30) über die Kommunikationsfähigkeiten, wenn Lebensmittel von einer Person, die die Lebensmittel isst, aus der Waage entnommen werden, und Speichern der Menge entnommener Lebensmittel während einer Sitzung in dem Speicher über Softwaremittel, die in der ersten Vorrichtung (30) untergebracht sind, , und Anzeigen des Gewichts der entnommenen Lebensmittel als Messpunkt auf dem Bildschirm, wenn sie aus der Waage entnommen werden, um in Echtzeit eine grafische Esskurve (12) zu erstellen, die mit der vorbestimmten Esskurve (10, 24) verglichen werden soll;
**dadurch gekennzeichnet, dass** das Verfahren weiter Folgendes umfasst:
automatisches Berechnen von Gleichungen über Mittel in dem Speicher für vorbestimmte Esskurven (10, 24), basierend auf Daten, die von einer kumulativen Lebensmitteleinnahme in einer Kontrollmahlzeit über eine Einführungskurve, gefolgt von Trainingskurven erhalten wurden, wobei die kumulative Lebensmitteleinnahme an eine Gleichung zweiten Grades $y = ax^2 + bx + c$ angeglichen wird, in der der Parameter y Lebensmitteleinnahme darstellt, a eine Änderung in der Neigung der Kurve im Laufe der Zeit darstellt, b eine konstante Neigung der Kurve im Laufe der Zeit x, also die anfängliche Essgeschwindigkeit darstellt, und c die Lebensmitteleinnahme zu Beginn einer Mahlzeit darstellt, wobei die Einführungskurve die gleichen Eigenschaften aufweist wie die in einer Kontrollmahlzeit erhaltene kumulative Lebensmitteleinnahme.

9. Verfahren nach Anspruch 8, wobei die Gleichung für jede Trainingskurve auf einem verlangsamten Essstil basiert, **dadurch gekennzeichnet, dass** a < -1 g/min$^2$ ist, oder einem linearen Gleichungstyp, **dadurch gekennzeichnet, dass** a in der Gleichung zwischen 0 >= a > -1 g/min$^2$ ist, wobei eine normale anfängliche Essgeschwindigkeit 48 g/min darstellt, und eine normale Lebensmitteleinnahme 320 - 360 g beträgt und eine normale Mahlzeitdauer 12 - 15 min beträgt, sodass ein Pseudocode für die Essgeschwindigkeit umfasst ist in: y = ax$^2$+ bx + c

$$\text{Lebensmitteleinnahme} = \text{wenn } y > 720 \text{ g, dann } 600, \text{ sonst } y - 70 \text{ g}$$

$$\text{Anfängliche Essgeschwindigkeit} = b - ([1/4] (b - 48 \text{ g/min}))$$

$$\text{Verlangsamung oder lineare Geschwindigkeit} = (y\text{-}bx) / x^2$$

10. Verfahren nach Anspruch 8, wobei die Waagenmessoberfläche der Waage (32) als Schüssel oder Platte, auf der die Lebensmittel serviert werden sollen, ausgebildet ist, und wobei die Waage (32) vorzugsweise in der Größe einer kleinen Tasche ist.

11. Verfahren nach Anspruch 8, wobei die vorbestimmte grafische Kurve (24) ein nicht lineares Essverhalten beschreibt, das dazu eingerichtet ist, ein Essverhalten nachzuahmen, das für menschliche Wesen vorteilhaft ist.

12. Verfahren nach Anspruch 8, wobei die vorbestimmte grafische Kurve (10) ein lineares Essgeschwindigkeitsverhalten beschreibt.

13. Verfahren nach Anspruch 8, wobei eine vorbestimmte grafische Sättigungskurve (16) auf dem Bildschirm angezeigt wird, damit sie mit Sättigungswerten (14) verglichen wird, die während voreingestellten Zeitintervallen auf dem Bildschirm von einer Person, die die Vorrichtung (30, 32) verwendet, gemacht wurden.

**Revendications**

1. Appareil médical (30, 32) composé d'au moins deux dispositifs adaptés pour mesurer la vitesse d'alimentation (12) utilisés pour apprendre aux personnes à manger en fonction d'une courbe d'alimentation graphique prédéterminée (10, 24) affichée sur un écran, comprenant :

un dispositif (30) avec un écran stockant ladite courbe d'alimentation graphique prédéterminée (10, 24) dans une mémoire, ledit premier dispositif (30) ayant au moins l'une des capacités de communication par rayonnement en champ proche à distance et par fil avec un second dispositif associé (32) ;
ledit second dispositif associé (32) étant une balance adaptée pour communiquer avec ledit premier dispositif (30), ayant au moins l'une des capacités de communication par rayonnement en champ proche à distance et par fil adaptée audit premier dispositif (30) ;
ladite balance étant adaptée pour recevoir des aliments à peser pendant une durée prédéterminée, le système comprenant en outre des moyens adaptés pour transmettre le poids des aliments audit premier dispositif (30) au moyen desdites capacités de communication lorsque les aliments sont retirés de ladite balance par une personne qui mange les aliments, et au moyen d'un logiciel résidant dans ledit premier dispositif (30) stockant la quantité d'aliments retirée pendant une session dans ladite mémoire, affichant le poids des aliments retiré comme point de mesure sur ledit écran lorsqu'elle est retirée de ladite balance pour constituer une courbe d'alimentation graphique en temps réel (12) à comparer avec ladite courbe d'alimentation prédéterminée (10, 24) ;
**caractérisé en ce que** l'appareil médical comprend en outre :
des moyens dans ladite mémoire calculant automatiquement des équations pour des courbes d'alimentation prédéterminées (10, 24) sur la base de données obtenues à partir d'une prise alimentaire cumulée dans un repas témoin au moyen d'une courbe de lancement suivie de courbes d'entraînement, de sorte que la prise alimentaire cumulée est ajustée à une équation quadratique y=ax$^2$+bx+c, le paramètre y représentant la prise alimentaire, a représentant une variation de la pente de la courbe en fonction du temps x, b représentant une pente constante de la courbe en fonction du temps, la vitesse d'alimentation initiale, et c représentant la prise alimentaire au début d'un repas, la courbe de lancement ayant les mêmes propriétés que la prise alimentaire cumulée obtenue dans un repas témoin.

2. Appareil selon la revendication 1, l'équation pour chaque courbe d'entraînement étant basée sur un style d'alimentation décéléré **caractérisé par le fait que** a est < -1 g/min², ou un type linéaire de l'équation **caractérisé par le fait que** a dans l'équation est compris entre $0 \geq a > -1$ g/min², une vitesse d'alimentation initiale normale constituant 48 g/min, et une prise alimentaire normale étant de 320-360 g et une durée de repas normale étant de 12-15 min, ainsi un pseudo-code pour la vitesse d'alimentation étant constitué par : $y = ax^2 + bx + c$

```
Prise alimentaire = si y > 720 g alors 600 sinon y
- 70 g

      Vitesse       d'alimentation      initiale
b-([1/4](b-48 g/min))

  Décélération ou vitesse linéaire = (y-bx)/x²
```

3. Appareil selon la revendication 1, ladite balance (32) ayant sa surface de mesure de la balance formée comme un bol ou une assiette sur laquelle on sert des aliments.

4. Appareil selon la revendication 1, ladite balance (32) étant d'un petit format de poche.

5. Appareil selon la revendication 1, ladite courbe graphique prédéterminée (24) décrivant un comportement alimentaire non linéaire, qui est adapté pour imiter un comportement alimentaire qui est favorable aux êtres humains.

6. Appareil selon la revendication 1, ladite courbe graphique prédéterminée (10) décrivant une vitesse linéaire de comportement alimentaire.

7. Appareil selon la revendication 1, une courbe graphique prédéterminée de satiété (16) étant affichée sur ledit écran, pour être comparée à des évaluations de satiété (14) réalisées pendant des intervalles de temps préétablis sur ledit écran par une personne utilisant ledit dispositif (30, 32).

8. Procédé adapté à un appareil médical (30, 32) constitué d'au moins deux dispositifs adaptés pour mesurer la vitesse d'alimentation (12) utilisés pour apprendre aux personnes à manger en fonction d'une courbe d'alimentation graphique prédéterminée (10, 24) affichée sur un écran, comprenant :

le stockage de ladite courbe d'alimentation graphique prédéterminée (10, 24) dans une mémoire d'un dispositif (30) avec un écran, ledit premier dispositif (30) ayant au moins l'une des capacités de communication par rayonnement en champ proche à distance et par fil avec un second dispositif associé (32) ;
l'adaptation d'une balance pour communiquer avec ledit premier dispositif (30) par l'intermédiaire dudit second dispositif associé (32), ayant au moins l'une des capacités de communication par rayonnement en champ proche à distance et par fil adaptée audit premier dispositif (30) ;
la pesée d'aliments sur ladite balance (32) au cours d'une session de mesure d'une certaine durée, et la transmission du poids des aliments audit premier dispositif (30) au moyen desdites capacités de communication lorsque les aliments sont retirés de ladite balance par une personne qui mange les aliments, et au moyen d'un logiciel résidant dans ledit premier dispositif (30), le stockage de la quantité d'aliments retirés au cours d'une session dans ladite mémoire, l'affichage du poids des aliments retirés en tant que point de mesure sur ledit écran lorsqu'ils sont retirés de ladite balance pour constituer une courbe d'alimentation graphique en temps réel (12) à comparer avec ladite courbe d'alimentation prédéterminée (10, 24) ;
**caractérisé en ce que** le procédé comprend en outre :
le calcul automatique d'équations par l'intermédiaire de moyens dans ladite mémoire pour des courbes d'alimentation prédéterminées (10, 24) sur la base de données obtenues à partir d'une prise alimentaire cumulée dans un repas témoin au moyen d'une courbe de lancement suivie de courbes d'entraînement, de sorte que la prise alimentaire cumulée est ajustée à une équation quadratique $y=ax^2+bx+c$, le paramètre y représentant la prise alimentaire, a représentant un changement de la pente de la courbe en fonction du temps, b représentant une pente constante de la courbe en fonction du temps X, la vitesse d'alimentation initiale, et c représentant la prise alimentaire au début d'un repas, la courbe de lancement ayant les mêmes propriétés que la prise alimentaire cumulative obtenue dans un repas témoin.

9. Procédé selon la revendication 8, l'équation pour chaque courbe d'entraînement étant basée sur un style d'alimentation décéléré **caractérisé par** a étant < -1 g/min$^2$, ou un type linéaire de l'équation **caractérisé par le fait que** a dans l'équation est compris entre $0 \geq a > -1$ g/min$^2$, une vitesse d'alimentation initiale normale constituant 48 g/min, et une prise alimentaire normale étant de 320-360 g et une durée de repas normale étant de 12-15 min, ainsi un pseudo code pour la vitesse d'alimentation est composé de : $y = ax^2 + bx + c$

```
Prise alimentaire = si y > 720 g alors 600 sinon
y -70g

        Vitesse       d'alimentation      initiale
b-([1/4](b-48 g/min))

Décélération ou vitesse linéaire = (y-bx)/x²
```

10. Procédé selon la revendication 8, ladite balance (32) ayant sa surface de mesure de balance formée comme un bol ou une assiette sur laquelle on sert des aliments, et de préférence ladite balance (32) étant d'un petit format de poche.

11. Procédé selon la revendication 8, ladite courbe graphique prédéterminée (24) décrivant un comportement alimentaire non linéaire, qui est adapté pour imiter un comportement alimentaire favorable aux êtres humains.

12. Procédé selon la revendication 8, ladite courbe graphique prédéterminée (10) décrivant une vitesse linéaire de comportement alimentaire.

13. Procédé selon la revendication 8, une courbe graphique prédéterminée de satiété (16) étant affichée sur ledit écran, pour être comparée à des évaluations de satiété (14) réalisées pendant des intervalles de temps prédéfinis sur ledit écran par une personne utilisant ledit appareil (30, 32).

Fig. 1

Fig. 2

42 ⌇ Computer Terminal

40 ⌇ Server

44 ⌇ BTS

46 ⌇ BSC

48 ⌇ MSC

30

34

32

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5817006 A, Bergh

- WO 0225228 A2

**Non-patent literature cited in the description**

- Decelerated and linear eaters: Effect of eating rate on food intake and satiety. **ZANDIAN M. et al.** Physiology and behavior. Elsevier Science Ltd, 16 February 2009, vol. 96, 270-275
- **MODJTABA ZANDIAN A ; TOANNIS TOAKIMIDIS A ; CECILIA BERGH A ; ULF BRODIN A,B ; PER SÖDERSTEN A.** Decelerated and linear eaters: Effect of eating rate on food intake and satiety. Elsevier, Physiology & Behavior, 18 March 2008

- **MODJTABA ZANDIAN ; LOANNIS LOAKIMIDIS ; CECILIA BERGH ; PER SÖDERSTEN.** Linear eaters turned decelerated: Reduction of a risk for disordered eating?. Elsevier, Physiology & Behavior, 04 July 2008